Europäisches Patentamt

(19) European Patent Office

Office européen des brevets

(11) Veröffentlichungsnummer: **0 254 707**
**B1**

# (12) EUROPÄISCHE PATENTSCHRIFT

(45) Veröffentlichungstag der Patentschrift:
05.09.90

(21) Anmeldenummer: 87890105.7

(22) Anmeldetag: 19.05.87

(51) Int. Cl.⁵: **G01D 5/243**, G01D 5/20,
G01L 9/10

(54) Elekronische Messeinrichtung.

(30) Priorität: 15.07.86 AT 1923/86

(43) Veröffentlichungstag der Anmeldung:
27.01.88 Patentblatt 88/4

(45) Bekanntmachung des Hinweises auf die Patenterteilung:
05.09.90 Patentblatt 90/36

(84) Benannte Vertragsstaaten:
CH DE FR GB IT LI NL SE

(56) Entgegenhaltungen:
DD-A- 223 808
DE-A- 2 452 257

(73) Patentinhaber: Sprecher Energie Österreich
Gesellschaft m.b.H., Franckstrasse 51, A-4020 Linz(AT)

(72) Erfinder: Wögerbauer, Johann, Steinbauerstrasse 7,
A-4040 Linz(AT)

(74) Vertreter: Rossboth, Werner Heinz, c/o Sprecher
Energie Österreich Gesellschaft m.b.H.
Franckstrasse 51, A-4020 Linz(AT)

**Beschreibung**

Die Erfindung bezieht sich auf eine elektronische Meßeinrichtung zur Erzeugung und Verarbeitung wegäquivalenter elektrischer Signale, mit zwei physikalisch gleichen Oszillatoren, welche als frequenzbestimmendes Element je eine Induktivität aufweisen, wobei mindestens eine Induktivität durch einen mechanischen Meßfühler beeinflußbar ist, und einem Mikroprozessor, der eine Zeit- und Speicher-Einheit aufweist.

Wegäquivalente elektrische Signale werden beispielsweise in der elektronischen Druckmessung benötigt, bei welcher der Weg, den eine Membrane beim Durchbiegen zurücklegt, dem Druck proportional ist.

Bekannte Verfahren zur Umwandlung dieses Weges in äquivalente elektrische Signale nützen den piezoresistiven Effekt einer Widerstandsbrücke, deren Widerstände sich beim Durchbiegen der Membrane einer Vakuumzelle ändern. Nachteilig ist bei diesen Verfahren, daß man nur ein schwaches äquivalentes Spannungssignal erhält, welches zur weiteren Verarbeitung vielfach verstärkt und temperaturkompensiert werden muß. Eine Veränderung der Parameter als Funktion der Zeit und Temperatur bzw. Drift, die das Meßergebnis verfälscht, ist dadurch unvermeidbar.

Aus der EP-PS 0 098 321 ist ein kombinierter Luftdruck- und Höhenmesser bekannt, der zur Umwandlung des Luftdruckes in eine elektrische Spannung eine Meßdose mit entsprechend dem Luftdruck zwischen einer Lichtquelle und einem Empfänger verschiebbarer Blende benützt. Die druckäquivalenten Spannungssignale werden in einem Mikrocomputer verarbeitet. Auch wenn man durch zusätzliche Temperaturfühler eine Temperaturkompensation vorsieht, bleibt die Genauigkeit dieses Luftdruck- und Höhenmessers begrenzt.

Bei einer aus der US-PS 3 808 480 bekannten elektronischen Druckmeßeinrichtung mit einer als Kondensator ausgebildeten Druckmeßdose wird zwar eine hohe Genauigkeit erreicht, jedoch eine spezielle, aufwendige Meßdose benötigt.

In der DE-OS 30 35 186 ist eine elektronische Meßeinrichtung mit zwei physikalisch gleichen Oszillatoren beschrieben, welche als frequenzbestimmendes Element je eine Induktivität aufweisen. Um Meßfehler, die auf Temperaturschwankungen beruhen, zu vermeiden, wird einer der Induktivitätswerte konstant gehalten, der andere entsprechend der Verformung einer mit ferritischer Oberfläche versehenen Membran geändert. Der jeweilige Meßwert wird aus der Frequenzdifferenz der beiden Oszillatoren ermittelt, wozu diese an einen Mischer angeschlossen sind, dessen Frequenzdifferenz-Ausgangssignal einem Frequenz/Spannungswandler zugeführt wird. Von Nachteil ist dabei, daß man nur ein relativ schwaches Spannungssignal erhält, welches zur weiteren Verarbeitung vielfach verstärkt werden muß, so daß eine Drift, die das Meßergebnis verfälscht, unvermeidbar ist. Bekanntlich errechnet sich die Frequenz eines Oszillators aus der Kreisfrequenz-Formel, daher ist das Spannungssignal auch kein lineares Maß für die Meßgröße.

Diese elektronische Meßeinrichtung kann daher nur ein relativ ungenaues Meßresultat liefern.

Den gleichen Nachteil weisen aus den US-PS 4 381 678, 4 393 715 und GB-PS 2 051 378 bekannte Druckaufnehmer auf, bei denen die Lage eines Ferritkernes die Induktivität einer Spule beeinflußt, wobei der Ferritkern mit seiner Stirnfläche zentrisch mit der Membrane einer Druckmeßdose fest verbunden sein kann.

Durch die in der Folge aufgezeigte erfindungsgemäße Ausführung wird bezweckt, eine elektronische Meßeinrichtung zur Erzeugung und Verarbeitung wegäquivalenter elektrischer Signale zu schaffen, die eine hohe Genauigkeit der Meßergebnisse liefert, eine hohe thermische Stabilität und Unempfindlichkeit gegen äußere Einflüsse besitzt, keine Drift aufweist und einfach und wirtschaftlich im Aufbau sowie universell in der Anwendung und eichbar ist.

Dies wird dadurch erreicht, daß beide Oszillatoren Hochfrequenzoszillatoren sind, die über einen Dual-Gate-Feldeffekttransistor und Schmitt-Trigger mit Hysterese an den Mikroprozessor angeschlossen sind und die Induktivitäten mit zentrischem Ferritkern besitzen, wobei der Ferritkern der Induktivität des einen Hochfrequenzoszillators justierbar und der Ferritkern der Induktivität des anderen Hochfrequenzoszillators mit dem mechanischen Meßfühler wirkverbunden ist.

Die beiden Hochfrequenzoszillatoren sind aufeinander genau abstimmbar. Wird durch den mechanischen Meßfühler der Ferritkern des einen Hochfrequenzoszillators verschoben, ergibt sich zwischen den beiden LC-Schwingkreisen eine Frequenzdifferenz, aus welcher der vom mechanischen Meßfühler zurückgelegte Weg bzw. der zu messende Wert einer Einheit exakt errechenbar ist. Durch Wahl hoher Frequenzen wird eine optimale Wegauflösung erzielt. Der physikalisch gleiche Aufbau der beiden LC-Schwingkreise und die Heranziehung der Frequenzdifferenz als Meßkriterium ergeben eine hohe thermische Stabilität und weitgehende Kompensation der Umgebungseinflüsse.

Im Dual-Gate-Feldeffekttransistor als Mischer wird die Frequenzdifferenz als Mischprodukt erzeugt und dem Schmitt-Trigger zur Digitalisierung zugeführt. Der Mikroprozessor zählt mit Hilfe seiner Zeit-Einheit als Programmunterbrecher diese digitalisierten Signale auf und linearisiert nicht nur die entsprechend der Kreisfrequenz-Formel nicht lineare Weg-Frequenz-Funktion, sondern erfüllt auch die zur Weiterverarbeitung erforderliche Signalaufbereitung.

Durch Anwendung von Korrekturfaktoren im Rechenprogramm des Mikroprozessors können Herstelltoleranzen oder sonstige Ungenauigkeiten des mechanischen Meßfühlers ausgeglichen werden, womit ein rechnerunterstütztes Eichen der Meßeinrichtung möglich ist. Das Auftreten einer Drift kann auf Grund reiner digitaler Verarbeitung. d.h. Aufzählung von Impulsen, vermieden werden.

In einer bevorzugten Ausführungsform ist die gesamte Schaltung zur Abschirmung in einem Metallgehäuse, vorzugsweise in einer zylindrischen, zweiteiligen Dose aus einer Aluminiumlegierung, angeordnet.

Der mechanische Meßfühler kann dabei die Membrane einer Druckmeßdose sein, welche zentrisch mit der einen Stirnfläche des Ferritkernes fest verbunden und zusammen mit der gesamten Schaltung in einer zylindrischen, zweiteiligen Dose aus einer Aluminiumlegierung, angeordnet ist.

Damit wird eine kompakte elektronische Meßeinrichtung als Geberelement zur Luftdruck- oder Höhenmessung erreicht, welche einerseits mit handelsüblichen Meßdosen bestückt werden kann und wirtschaftlich im Aufbau ist, anderseits Meßergebnisse sehr hoher Genauigkeit liefert und eichbar ist.

Der mechanische Meßfühler kann aber auch ein Bimetall oder mit einem Bimetall zusammenwirkender Teil sein, wodurch die elektronische Meßeinrichtung zur genauen Temperaturmessung ausgebildet ist. Es ist auch denkbar, daß der Ferritkern mit einem Körper fest verbunden ist, welcher aus einem Werkstoff mit großem linearen Ausdehnungskoeffizienten besteht.

Soferne der mechanische Meßfühler Teil eines Hygrometers ist, wird eine elektronische Feuchtigkeitsmessung ermöglicht.

Der mechanische Meßfühler kann Teil jeder Meßvorrichtung sein, bei welcher der kurze Weg einer Sonde als Maß für die Meßgröße dient.

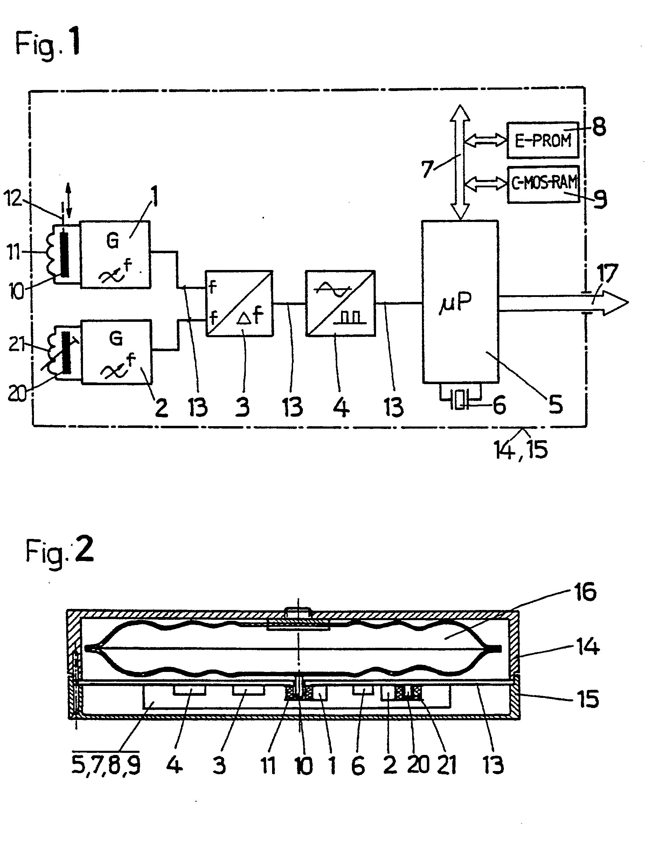

Im folgenden wird an Hand der Zeichnung eine Ausführungsbeispiel der erfindungsgemäßen elektronischen Meßeinrichtung näher erläutert. Es zeigen: Fig. I das Blockschaltbild der elektronischen Meßeinrichtung und Fig. 2 eine Ausführung als Geberelement eines elektronischen Druck- oder Höhenmessers.

Aus dem in Fig. I dargestellten Blockdiagramm einer erfindungsgemäßen elektronischen Meßeinrichtung erkennt man, daß zwei physikalisch gleiche Hochfrequenzoszillatoren I, 2 über die elektrische Verbindung I3 an einen DualGate-Feldeffekttransistor 3, Schmitt-Trigger 4 mit Hysterese und Mikroprozessor 5 angeschlossen sind. Der Ferritkern IO der Induktivität II des einen Hochfrequenzoszillators I ist mit einem mechanischen Meßfühler I2 wirkverbunden und durch diesen axial verschiebbar, wogegen der Ferritkern 2O der Induktivität 2I durch eine Schraube justierbar ist. Der Mikroprozessor besitzt eine quarzgesteuerte Zeit-Einheit 6 und über Busleitungen 7 angeschlossene Speicher-Einheit 8, 9, die aus einem Programmspeicher (E-PROM) sowie Arbeitsspeicher (C-MOS-RAM), vorzugsweise aus integrierten C-MOS-Schaltkreisen, besteht.

Beide Hochfrequenzoszillatoren I, 2, als LC-Schwingkreise, sind aufeinander genau abgestimmt. Wird nun durch den mechanischen Meßfühler I2 der Ferritkern IO verschoben, ändert sich die Frequenz des einen Hochfreqzenzoszillators I und es ergibt sich eine Frequenzdifferenz, die vom Dual-Gate-Feldeffekttransistor 3 erfaßt und zur Digitalisierung einem Schmitt-Trigger 4 mit Hysterese zugeführt wird. Diese digitalisierten elektrischen Signale gelangen direkt in den Mikroprozessor als Programmunterbrecher und werden dort weiterverarbeitet.

Bekanntlich ändert sich die Frequenz eines Schwingkreises nach der Kreisfrequenz-Formel. Die Beziehung der Frequenzdifferenz zum zurückgelegten Weg des Ferritkernes IO bzw. mechanischen Meßfihlers I2 ist daher nicht linear und muß linearisiert werden. Diese Aufgabe erfüllt der Mikroprozessor 5, der mit Hilfe seiner Zeit-Einheit 6 und seines Arbeitsspeichers 9 die digitalisierten Signale pro Zeiteinheit aufzählt und seines im Programmspeicher 8 eingegebenen Programms linearisiert, weiterverarbeitet und speichert oder auf Befehl am Ausgang I7 liefert.

Durch Wahl hoher Frequenzen wird eine sehr hohe Wegauflösung erreicht, wobei jedoch das Mischprodukt aus dem Dual-Gate-Feldeffekttransistor 3 niederfrequent ist und direkt digital weiterverarbeitet werden kann. Die elektronische Meßeinrichtung weist eine sehr hohe thermische Stabilität und weitgehende Kompensation der Umgebungseinflüsse auf, weil solche Einflüsse gleichermaßen auf beide Hochfrequenzoszillatoren I, 2 wirken und das Mischprodukt kaum beeinflussen. Da keine hohen Verstärkungen der Impulse erforderlich sind und das Mischprodukt direkt digital weiterverarbeitbar ist, können Probleme durch Driften, wie sie beispielsweise bei piezoresistiven Meßsystemen auftreten, vermieden werden.

Zur Abschirmung gegen äußere elektromagnetische Einflüssé ist die gesamte Schaltung in einem Metallgehäuse I4, I5 untergebracht. Im Ausführungsbeispiel gemäß Fig. 2 dient die elektronische Meßeinrichtung als Geberelement für einen Druck- oder Höhenmesser. Der mechanische Meßfühler I2 ist hier die Membrane einer handelsüblichen Druckmeßdose I6, die zentrisch in einer zylindrischen, zweiteiligen Dose I4, I5 aus einer Aluminiumlegierung befestigt ist. Die eine Stirnfläche des Ferritkernes IO ist zentrisch mit der Membrane I2 fest verbunden, beispielsweise durch Kleben, so daß bei einer Druckänderung der Ferritkern IO axial verschoben wird und eine Frequenzänderung des Hochfrequenzoszillators I verursacht.

Beide Hochfrequenzoszillatoren I, 2, mit ihren Induktivitäten II, 2I, der Dual-Gate-Feldeffekttransistor 3, Schmitt-Trigger 4 und Mikroprozessor 5, 6, 7, 8, 9 sind auf einer gedruckten Schaltungsplatte I3 angeordnet, welche zwischen den zwei Teilen der Dose I4, I5 fixiert ist. Es ergibt sich dadurch eine kompakte elektronische Meßeinrichtung, die als Geberelement für einen Druck- oder Höhenmesser bestens geeignet ist.

Abgesehen davon , daß die Meßergebnisse eine hohe thermische Stabilität, weitgehende Unempfindlichkeit gegen äußere Einflüsse und hohe Druck- oder Höhenauflösung aufweisen, können durch die Anwendung von Korrekturfaktoren im Rechenprogramm für den Mikroprozessor 5, 8 Herstelltoleranzen oder sonstige spezifische Daten jeder handelsüblichen Druckdose I6 berücksichtigt werden und die Genauigkeit der Ergebnisse über den gesamten Meßbereich erhöht werden.

Die erfindungsgemäße elektronische Meßeinrichtung ist universell als Teil jeder Meßvorrichtung einsetzbar, bei welcher der kurze Weg einer Sonde bzw. eines mechanischen Meßfühlers l2 als Maß für die Meßgröße dient.

**Patentansprüche**

I. Elektronische Meßeinrichtung zur Erzeugung und Verarbeitung wegäquivalenter elektrischer Signale, mit zwei physikalisch gleichen Oszillatoren (1, 2), welche als frequenzbestimmendes Element je eine Induktivität (11, 21) aufweisen, wobei eine Induktivität (11) durch einen mechanischen Meßfühler (12) beeinflußbar ist, und einem Mikroprozessor (5, 6, 7, 8, 9), der eine Zeit- und Speicher-Einheit aufweist, und wobei beide Oszillatoren Hochfrequenzoszillatoren (l, 2) sind, die über einen Dual-Gate-Feldeffekttransistor (3) und Schmitt-Trigger (4) mit Hysterese an den Mikroprozessor (5,6,7,8,9) angeschlossen sind und die Induktivitäten (ll,2l) mit zentrischem Ferritkern (lO, 2O) besitzen, wobei der Ferritkern (2O) der Induktivität (2l) des einen Hochfrequenzoszillators (2) justierbar und der Ferritkern (lO) der Induktivität (ll) des anderen Hochfrequenzoszillators (l) mit dem mechanischen Meßfühler (l2) wirkverbunden ist.

2. Elektronische Meßeinrichtung nach Anspruch I, dadurch gekennzeichnet, daß die gesamte Schaltung zur Abschirmung in einem Metallgehäuse (l4, l5), vorzugsweise in einer zylindrischen, zweiteiligen Dose aus einer Aluminiumlegierung, angeordnet ist.

3. Elektronische Meßeinrichtung nach Anspruch I oder 2, dadurch gekennzeichnet, daß der mechanische Meßfühler (l2) ein Bimetall oder mit einem Bimetall zusammenwirkender Teil ist.

4. Elektronische Meßeinrichtung nach Anspruch I oder 2, dadurch gekennzeichnet, daß der mechanische Meßfühler (l2) Teil eines Hygrometers ist.

**Claims**

1. Electronic measuring device for producing and processing electrical signals which are equivalent to a path, with two physically identical oscillators (1,2) each having an inductance (11,21) as the frequency determining element, it being possible for one inductance (11) to be influenced by a mechanical measuring probe (12), and with a microprocessor (5,6,7,8,9) which has a timer unit and memory unit, and both oscillators being high frequency oscillators (1,2) which are connected via a dual gate field effect transistor (3) and Schmitt trigger (4) with hysteresis to the microprocessor (5,6,7,8,9) and which possess inductances (11,21) with central ferrite cores (10,20), the ferrite core (20) of the inductance (21) of the one high frequency oscillator (2) being adjustable and the ferrite core (10) of the inductance (11) of the other high frequency oscillator (1) being functionally connected to the mechanical measuring probe (12).

2. Electronic measuring device according to Claim 1, characterized in that the whole circuit is arranged for screening purposes in a metal housing (14,15), preferably in a cylindrical two-part can of an aluminium alloy.

3. Electronic measuring device according to Claim 1 or 2, characterized in that the mechanical measuring probe (12) is a bimetallic element or a part which cooperates with a bimetallic element.

4. Electronic measuring device according to Claim 1 or 2, characterized in that the mechanical measuring probe (12) is part of a hygrometer.

**Revendications**

1. Dispositif de mesure électronique pour la production et le traitement de signaux électriques équivalents à des déplacements, avec deux oscillateurs physiquement égaux (1,2) qui comprennent chacun une inductance (11,21) comme élément déterminant la fréquence, dans lequel l'une des inductances (11) est rendue variable par un capteur mécanique (12), le dispositif comportant un microprocesseur (5,6,7,8,9) qui comprend une horloge et une unité de mémoire, et deux oscillateurs (1,2) qui sont reliés au microprocesseur (5,6,7,8,9) par un transistor à effet de champ bigrille (3) et un trigger de Schmitt avec hystérésis (4), les inductances (11,21) possédant des noyaux de ferrite (10,20) centrés, le noyau de ferrite (20) de l'inductance (21) de l'un (2) des oscillateurs à haute fréquence étant réglable, le noyau de ferrite (10) de l'inductance (11) de l'autre (1) oscillateur à haute fréquence étant relié de manière active au capteur mécanique (12).

2. Dispositif de mesure électronique selon la revendication 1, caractérisé en ce que le circuit entier est placé dans un boîtier métallique (14,15) constituant un écran, de préférence dans une boîte cylindrique en deux parties en alliage d'aluminium.

3. Dispositif de mesure électronique selon la revendication 1 ou 2, caractérisé en ce que le capteur mécanique est un bimétal ou coopère avec une partie en bimétal.

4. Dispositif de mesure électronique selon la revendication 1 ou 2, caractérisé en ce que le capteur mécanique (12) est une partie d'un hygromètre.

Fig. 1

Fig. 2